# FASCICULE DE BREVET EUROPEEN

(11) **EP 1 032 806 B1**
(45) Date de publication et mention de la délivrance du brevet: **02.08.2006**
(21) Numéro de dépôt: 99929374.9
(22) Date de dépôt: 30.06.1999
(51) Int. Cl.: G01F 11/18

(54) **DISPOSITIF DE DOSAGE VOLUMETRIQUE**
VORRICHTUNG ZUR VOLUMENDOSIERUNG
VOLUMETRIC FILLING DEVICE

(30) Priorité: 30.06.1998 FR 9809237
(43) Date de publication de la demande: 06.09.2000
(73) Titulaire: Ferrand, Jacques, 63450 Chanonat (FR)
(72) Inventeur: Ferrand, Jacques, 63450 Chanonat (FR)
(74) Mandataire: Chanet, Jacques
(86) Numéro de dépôt international: PCT/FR1999/001566
(87) Numéro de publication internationale: WO 2000/000794

(56) Documents cités:
- WO-A-90/03726
- DE-C- 360 668
- FR-A- 882 305
- FR-A- 1 441 350
- FR-A- 2 718 233

## Description

L'invention est du domaine du dosage volumétrique, et elle a pour objet un dispositif de dosage de matière divisée ou en grain.

On connaît divers dispositifs pour le dosage volumétrique de matière divisée, voire pulvérulente, en vue notamment d'alimenter un réceptacle, pour une mise en sachet du produit par exemple.

Parmi ces dispositifs, on connaît plus particulièrement ceux du genre comprenant une trémie d'alimentation par gravité du produit, qui surplombe un châssis comportant des chambres adjacentes équipées chacune à leur fond d'un clapet mobile. Le châssis est déplaçable, par rotation ou translation selon son agencement, pour amener alternativement les chambres sous le débouché de la trémie en vue de leur remplissage, pendant qu'une chambre précédemment remplie est vidée vers un réceptacle d'admission du produit ainsi dosé. On pourra notamment se reporter aux brevets FR1441350 (HAMAC) et FR2718233 (HASSIA) et WO 90/03726 où une plaque pourvue d'ouvertures formant des chambres de réception est déplacée en translation sur un fond fixe percé d'orifices par lesquels, lorsqu'ils coïncident avec une ouverture, s'écoule le produit.

Les difficultés à surmonter résident dans l'optimisation des cadences de remplissage/vidange des chambres et dans l'obtention d'un dosage sans détérioration du produit. De manière courante, le produit est arasé à l'issue du remplissage des chambres et notamment concomitamment au déplacement du châssis, pour obtenir un dosage du produit en correspondance avec le volume des chambres. Cette solution permet d'obtenir des cadences importantes, mais provoque une détérioration du produit. Une autre solution connue consiste à effectuer une opération de balayage pour retirer un surplus éventuel de produit à l'issue du remplissage des chambres, ce qui a pour conséquence de salir le dispositif par une dispersion du produit en surplus et souvent de porter atteinte aux cadences de remplissage/vidange des chambres.

Le but de l'invention est de proposer un procédé de dosage volumétrique de produit divisé ou en grain, du genre susvisé, dont les cadences de remplissage/vidange des chambres soient optimales et qui exclut tout risque de détérioration du produit.

La démarche inventive dans sa globalité a consisté à agencer les chambres dans un récipient comportant au moins une cloison mince pour séparer ces dernières deux à deux, afin de réduire au mieux l'écart entre deux chambres adjacentes. Le débouché de la trémie surplombe le récipient à une distance d de l'ordre de la distance longitudinale séparant le bord de la trémie de la cloison multipliée par la pente formée par le talus naturel du produit, de manière à ce que l'écoulement du produit s'arrête naturellement lorsque la base du talus formé dans la chambre avoisine le sommet de la cloison séparatrice.

Ces dispositions sont telles que le remplissage des chambres s'effectue par un écoulement quasi-continu du produit hors de la trémie et que le dosage soit fiable en prenant en compte le talus formé parole produit. On notera que pour être précis, le procédé doit comprendre un arrêt naturel par le talus de l'écoulement du produit, si court que soit ce temps d'arrêt. Le déplacement du châssis d'une chambre à l'autre est rendu possible grâce à la contiguïté des chambres, séparées seulement par l'épaisseur de la cloison. On notera que cette contiguïté est par ailleurs telle, en combinaison avec un niveau de remplissage du produit jusqu'au voisinage du bord supérieur de la cloison séparatrice, que le déversement continu du produit ne porte quasiment pas atteinte à la quantité de produit dosée dans une chambre remplie lors du déplacement du récipient pour le remplissage d'une chambre voisine, dans la mesure où l'écoulement du produit s'effectue dans la dite chambre voisine dès le déplacement du récipient.

Pour permettre d'affiner le dosage, le dispositif étant utilisé pour réaliser l'invention est de préférence pourvu de moyens de réglage de la dite distance d en fonction du produit dosé, et donc de la pente de son talus naturel, les dits moyens étant constitués par l'un quelconque au moins des moyens du groupe de moyens comprenant des moyens de déplacement vertical du débouché de la trémie, par un agencement télescopique de son conduit par exemple, et des moyens de réglage de la capacité des chambres, constitués par des moyens de réglage de la hauteur de la cloison séparatrice des chambres et/ou encore par un corps disposé dans le volume des chambres, équipé de moyens de déplacement pour ajuster son encombrement à l'intérieur de ces dernières.

On notera que selon diverses formes de réalisation, le récipient est conformé en parallélépipède comportant une cloison unique délimitant un couple de chambres, celui-ci étant animé d'un mouvement de translation, ou encore le récipient est conformé en cylindre disposé verticalement pourvu d'au moins deux cloisons radiales délimitant les chambres, le dit cylindre étant équipé de moyens de déplacement en rotation autour de son axe.

La présente invention sera mieux comprise, et des détails en relevant apparaîtront, à la description qui va en être faite d'une forme préférée de réalisation en relation avec les figures de la planche annexée, dans laquelle:
la fig.1 est une vue schématique de face illustrant un dispositif étant utilisé selon une forme préférée de réalisation de l'invention,
la fig.2 est une vue schématique de dessus d'un même dispositif.

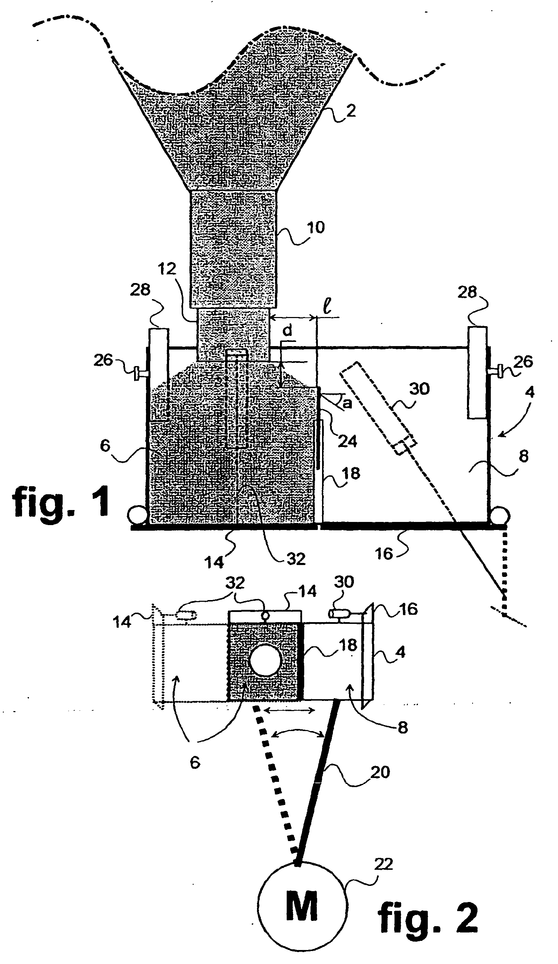

Sur les figures, un dispositif de dosage volumétrique de matière divisée ou en grain, comprend une trémie 2 d'approvisionnement par gravité, qui surplombe un châssis mobile 4 pourvu d'au moins deux chambres avoisinantes 6 et 8 de réception du produit. Le débouché du conduit 10,12 de la trémie 2 est prévu pour être alternativement placé au-dessus de chacune des chambres 6 et 8 en vue de leur remplissage successif. Ces dernières 6 et 8 sont chacune pourvues à leur base d'un clapet mobile 14 et 16 pour évacuer le produit d'une chambre, telle que 8 sur l'exemple illustré, vers un réceptacle d'admission (non représenté sur les figures) du produit dosé pendant l'opération de remplissage d'une autre chambre 6, tel qu'illustré sur la fig.1.

Selon la présente invention le châssis mobile 4 est avantageusement constitué par un récipient qui comporte au moins une cloison mince 18 de séparation des dites chambres 6 et 8 deux à deux.

Selon l'exemple préféré de réalisation illustré, dans lequel le récipient 4 est globalement parallélépipédique, celui-ci 4 comporte une cloison unique 18 qui délimite un couple de chambres 6 et 8. Ce récipient 4 est équipé de moyens 20,22, dits troisièmes, de déplacement en translation, ou assimilé.

En se reportant à la fig.2, les troisièmes moyens sont constitués par un organe moteur rotatif 22 dont le mouvement est asservi pour transmettre un mouvement pivotant alternatif à un bras 20 support du récipient 4. On notera toutefois que selon une autre forme de réalisation, non préférée et non illustrée, les troisièmes moyens sont constitués par un vérin, pneumatique notamment, disposé dans l'axe de déplacement du récipient 4.

On comprendra que l'agencement susvisé du récipient 4, à savoir une conformation parallélépipédique avec un couple de chambres 6,8 et des moyens 20,22 d'entraînement alternatif grosso-modo en translation à partir d'un mouvement pivotant, permet d'obtenir un cycle rapide de remplissage/vidange des chambres 6,8 et donc des cadences optimales pour ce genre de dispositif, et que cet agencement est avantageusement autorisé par la minceur de la cloison 18 et la contiguïté des chambres 6,8 qui en découle, pour permettre un écoulement en quasi-continu du produit hors de la trémie 2, sans nécessiter d'opération de balayage inopportune.

Selon la présente invention toujours, le débouché du conduit 10,12 de la trémie 2 est disposé à une distance d au-dessus de la dite cloison 18, d étant au moins égale à la grosseur maximale des grains du produit pour éviter tout cisaillement de ces derniers lors du déplacement du récipient 4.

La dite distance d est au plus égale à la distance longitudinale l séparant le bord de la trémie 2 de la cloison 18 multipliée par la pente (tangente a) formée par le talus naturel du produit au dessous du débouché de la trémie 2. On notera que cette distance maximale est souhaitée, car les dispositions de la présente invention sont telles que, le remplissage des chambres 6,8 s'effectuant par un écoulement quasi-continu du produit hors de la trémie 2, le produit ne soit en aucun cas cisaillé lors du déplacement du récipient et que le volume dosé, qui prend en compte le talus naturel formé par le produit, soit fiable, la base du talus affleurant au plus le bord supérieur de la cloison 18 de manière à interdire tout déversement du produit dans la chambre voisine 8 et de manière à limiter la quantité de produit déversée dans la chambre 6 en cours de remplissage lors du déplacement du récipient 4 pour le remplissage d'une chambre voisine 8.

Le dispositif comporte avantageusement des moyens 10,12 et/ou 18/24, dits premiers, de réglage de la dite distance d séparant le débouché du conduit de la trémie 2 et la cloison 18 du récipient 4, pour notamment ajuster la quantité de produit déversable dans les chambres 6,8 en prenant en compte la pente du talus naturel du produit.

Ces premiers moyens sont, sur l'exemple illustré, constitués par un agencement télescopique du conduit 10,12 de la trémie 2.

Par ailleurs, le dispositif comporte avantageusement des moyens 18/24 et/ou 28/26, dits deuxièmes, de réglage de la capacité des chambres 6 et 8, qui permettent notamment d'affiner progressivement à l'usage la quantité de produit dosé.

Selon un premier exemple de réalisation, les dits deuxièmes moyens sont constitués par des moyens 18,24 de réglage de la hauteur de la cloison 18 séparatrice des chambres 6 et 8, tel qu'un agencement télescopique 24 de la cloison 18 à la manière illustrée.

On notera que selon cette forme de réalisation des deuxièmes moyens, le réglage de la hauteur de la cloison séparatrice 18 s'effectue en correspondance avec le réglage des premiers moyens 10,12.

Selon un deuxième exemple de réalisation, qui de préférence complète le premier, les dits deuxièmes moyens sont constitués par un corps 28, disposé dans chacun des volumes des chambres 6 et 8, équipé de moyens de déplacement pour ajuster son encombrement à l'intérieur des chambres.

Selon une forme préférée de réalisation, tel qu'illustré, le corps est constitué par un coulisseau 28 exempt d'arêtes vives guidé le long de, et immobilisable au moyen d'un organe 26 de blocage sur, une paroi latérale du récipient 4 ; selon une autre forme de réalisation, non préférée pour éviter la présence d'un obstacle à la chute du produit hors de la chambre 6,8 lors de la manoeuvre du clapet 14,16, le dit corps est formé par une vis traversant une paroi latérale du récipient 4 ou le clapet 14,16.

On remarquera enfin sur l'exemple illustré que les clapets sont manoeuvrables au moyen d'un vérin 30, 32 respectif articulé sur le récipient 4.

Bien que l'on ait décrit et représentée une forme préférée de réalisation de l'invention, il doit être compris que la portée de cette dernière n'est pas limitée à cette forme, mais qu'elle s'étend à tout dispositif de dosage volumétrique comportant les caractéristiques énoncées dans les revendications ci-annexées.

## Revendications

1. Procédé de dosage volumétrique de matière divisée ou en grain, à l'aide d'un dispositif comprenant une trémie (2) d'approvisionnement par gravité surplombant un châssis mobile pourvu d'au moins deux chambres avoisinantes de réception du produit, de manière à ce que le débouché du conduit de la trémie (2) soit alternativement placé au-dessus de chacune des chambres en vue de leur remplissage successif, les dites chambres étant chacune pourvue à leur base d'un clapet (14,16) mobile (30) pour évacuer le produit d'une chambre vers un réceptacle d'admission du produit dosé pendant l'opération de remplissage d'une autre chambre, **caractérisé en ce qu'**il compprend une étape consistant à :
disposer le débouché du conduit (12) de la trémie (2) à une distance (d) au dessus d'au moins une cloison mince (18) de séparation deux à deux des chambres (6, 8) d'un récipient (4) constituant le châssis mobile, ladite distance (d) étant au moins égale à la grosseur maximale des grains du produit et au plus égale à la distance longitudinale l séparant le bord de la trémie (2) de la cloison (18) multipliée par la pente (tga) formée par le talus naturel du produit au dessous du débouché de la trémie (2),
de telle sorte que, le remplissage des chambres (6, 8) s'effectuant par un écoulement quasi-continu du produit hors de la trémie (2), le produit ne soit en aucun cas cisaillé lors du déplacement du récipient (4) et que le volume dosé, qui prend en compte le talus naturel formé par le produit, soit fiable, la base du talus affleurant au plus le bord supérieur de la cloison (18) de manière à interdire tout déversement du produit dans la chambre (6, 8) voisine et de manière à limiter la quantité de produit déversée dans la chambre en cours de remplissage (6) lors du déplacement du récipient pour le remplissage d'une chambre voisine (8).

2. Procédé selon la revendication 1, **caractérisé:**
**en ce qu'**il comporte une étape de réglage de la dite distance d séparant le débouché du conduit de la trémie (2) et la cloison (18) du récipient (4) pour ajuster la quantité de produit déversable dans la chambre (6,8) à l'aide des moyens (10/12 ; 18/24), dits premiers.

3. Procédé selon la revendication 2, **caractérisé:**
**en ce que** les dits premiers moyens sont constitués par un agencement télescopique du conduit (10/12) de la trémie (2).

4. Procédé selon la revendication 1, **caractérisé:**
**en ce qu'**il comporte une étape de réglage de la capacité des chambres (6,8) à l'aide des moyens (18/24;28/26), dits deuxièmes.

5. Procédé selon la revendication 4, **caractérisé:**
**en ce que** les dits deuxièmes moyens sont constitués par des moyens (18/24) de réglage de la hauteur de la cloison (18) séparatrice des chambres.

6. Procédé selon la revendication 4, **caractérisé:**
**en ce que** les dits deuxièmes moyens sont constitués par un corps (28), disposé dans le volume des chambres (6,8), équipé de moyens de déplacement et de blocage (26) pour ajuster son encombrement à l'intérieur des chambres (6,8).

7. Procédé selon la revendication 1, **caractérisé**
**en ce qu'**il comprend une étape de déplacement en translation du récipient (4), ledit recipient étant globalement parallélépipédique et comportant une cloison unique (18) délimitant un couple de chambres (6,8), ledit récipient étant équipé de moyens (20, 22), dits troisièmes, de déplacement en translation.

8. Procédé selon la revendication 1, **caractérisé:**
**en ce qu'** il comprend une étape de déplacement en rotation du récipient, le récipient étant un cylindre disposé verticalement pourvu d'au moins deux cloisons radiales délimitant les chambres, ledit récipient étant équipé de moyens de déplacement en rotation autour de son axe.

## Claims

1. Method for volumetric feeding of material which is divided or in the form of grain, by means of a device comprising a hopper (2) for supply by gravity, which overhangs a mobile frame which is provided with at least two adjacent chambers for receipt of the product, such that the outlet of the duct of the hopper (2) is placed alternately above each of the chambers in order to fill the latter in succession, the said chambers each being provided at their base with a flap valve (14, 16) which is mobile (30) in order to discharge the product from one chamber to a receptacle for intake of the product fed during the operation of filling another chamber, **characterised in that** it comprises a step consisting of:
placing the outlet of the duct (12) of the hopper (2) at a distance (d) above at least one thin partition (18) for separation into pairs of the chambers (6, 8) of a container (4) which constitutes the mobile frame, the said distance (d) being at the least equal to the maximum thickness of the grains of the product and at the most equal to the longitudinal distance l which separates the edge of the hopper (2) from the partition (18), multiplied by the gradient (tga) formed by the natural slope of the product below the outlet of the hopper (2), such that, since the filling of the chambers (6, 8) is carried out by means of a virtually continuous flow of the product out of the hopper (2), the product is not under any circumstances sheared during the displacement of the container (4), and the volume fed, which takes into account the natural slope formed by the product, is reliable, the base of the slope being flush with at the most the upper edge of the partition (18), such as to prevent any discharge of the product into the adjacent chamber (6, 8) and such as to limit the quantity of product discharged into the chamber in the course of filling (6), during the displacement of the container for filling of an adjacent chamber (8).

2. Method according to claim 1, **characterised in that** it comprises a step of adjustment of the said distance d which separates the outlet of the duct of the hopper (2) and the partition (18) from the container (4) in order to modify the quantity of product which can be poured into the chamber (6, 8) using so-called first means (10/12; 18/24).

3. Method according to claim 2, **characterised in that** the said first means consist of a telescopic arrangement of the duct (10 /12) of the hopper (2).

4. Method according to claim 1, **characterised in that** it comprises a step of adjustment of the capacity of the chambers (6, 8), using so-called second means (18/24; 28/26).

5. Method according to claim 4, **characterised in that** the said second means consist of means (18/24) for adjustment of the height of the partition (18) which separates the chambers.

6. Method according to claim 4, **characterised in that** the said second means consist of a body (28) which is disposed in the volume of the chambers (6, 8) and is equipped with means for displacement and locking (26) in order to adjust its size inside the chambers (6, 8).

7. Method according to claim 1, **characterised in that** it comprises a step of displacement in translation of the container (4), the said container being parallelepiped as a whole and comprising a single partition (18) which delimits a pair of chambers (6, 8), the said container being equipped with so-called third means (20, 22) for displacement in translation.

8. Method according to claim 1, **characterised in that** it comprises a step of displacement in rotation of the container, the container being a cylinder which is arranged vertically and is provided with at least two radial partitions which delimit the chambers, the said container being equipped with means for displacement in rotation around its axis.

## Patentansprüche

1. Verfahren zur Volumendosierung von unterteiltem oder körnigem Material mittels einer Vorrichtung, die einen Bunker (2) zur Belieferung durch Schwerkraft umfasst, der über einem mit mindestens zwei benachbarten Kammern zur Aufnahme von Produkt versehenes Gestell angeordnet ist, derart, dass die Mündung des Kanals des Bunkers (2) abwechselnd über jede der-Kammern für ihre auf einander folgende Befüllung platziert wird, wobei die Kammern jeweils an ihrem Grund mit einer beweglichen (30) Verschlussklappe (14, 16) versehen ist, um das Produkt aus einer Kammer in einen Behälter zur Aufnahme von dosiertem Produkt während des Befüllungsvorganges einer anderen Kammer zu entleeren, **dadurch gekennzeichnet, dass** es einen Schritt umfasst, bestehend aus: Anordnen der Mündung (12) des Bunkers (2) in einem Abstand (d) über mindestens einer dünnen Trennwand (18) zwischen einem Paar von Kammern (6, 8) eines das bewegliche Gestell bildenden Behälters (4), wobei der Abstand (d) mindestens gleich der maximalen Größe der Körner des Produkts und höchstens gleich dem Längsabstand 1, der den Rand des Bunkers (2) von der Trennwand (18) trennt, multipliziert mit der Steigung (tga) ist, die von der natürlichen Böschung des Produktes unterhalb der Mündung des Bunkers (2) gebildet wird, derart, dass die Befüllung der Kammern (6, 8) durch ein quasi kontinuierliches Ausströmen des Produktes aus dem Bunker (2) durchgeführt wird, das Produkt in keinem Fall bei der Verschiebung des Behälters (4) abgeschert wird und dass das dosierte Volumen, das die von dem Produkt gebildete natürliche Böschung berücksichtigt, zuverlässig ist, wobei die Basis der Böschung höchstens an dem obersten Rand der Trennwand (18) anliegt, um jede Ausschüttung des Produkts in die benachbarte Kammer (6, 8) zu verbieten und um die Menge des in die in Befüllung befindlichen Kammer (6) eingefüllten Produktes bei der Verschiebung des Behälters für die Befüllung einer benachbarten Kammer (8) zu begrenzen.

2. Verfahren nach Anspruch 1, **dadurch gekennzeichnet, dass** es einen Schritt zur Einstellung des Abstandes d umfasst, der die Mündung des Kanals des Bunkers (2) und die Trennwand (18) des Behälters (4) trennt, um die Menge des in die Kammer (6, 8) ausschüttbaren Produktes mit Hilfe von Mitteln (10/12; 18/24), genannt erste Mittel einzustellen.

3. Verfahren nach Anspruch 2, **dadurch gekennzeichnet, dass** die ersten Mittel durch eine teleskopische Anordnung des Kanals (10/12) des Bunkers (2) gebildet werden.

4. Verfahren nach Anspruch 1, **dadurch gekennzeichnet, dass** es einen Schritt des Einstellens der Kapazität der Kammern (6, 8) mit Hilfe von Mitteln (18/27; 28/26), genannt zweiten Mitteln umfasst.

5. Verfahren nach Anspruch 4, **dadurch gekennzeichnet, dass** die zweiten Mittel durch Mittel (18/24) zum Einstellen der Höhe der Trennwand (18) der Kammern gebildet werden.

6. Verfahren nach Anspruch 4, **dadurch gekennzeichnet, dass** die zweiten Mittel durch einen Körper (28) gebildet werden, der in dem Volumen der Kammern (6, 8) angeordnet ist und mit Mitteln zur Verschiebung und Feststellung (26) ausgerüstet ist, um seinen Raumbedarf im Inneren der Kammern (6, 8) einzustellen.

7. Verfahren nach Anspruch 1, **dadurch gekennzeichnet, dass** es einen Schritt der translatorischen Verschiebung des Behälters (4) umfasst, wobei der Behälter im Allgemeinen gesehen quaderförmig ist und eine einzige Trennwand (18) aufweist, die ein Paar von Kammern (6, 8) begrenzt, wobei der Behälter mit Mitteln (20, 22), genannt dritten Mitteln für die translatorische Verschiebung ausgerüstet ist.

8. Verfahren nach Anspruch 1, **dadurch gekennzeichnet, dass** es einen Schritt der rotatorischen Verschiebung des Behälters umfasst, wobei der Behälter ein vertikal angeordneter Zylinder ist, der mit mindestens zwei radialen die Kammern begrenzenden Trennwänden versehen ist, wobei der Behälter mit Mitteln zur rotatorischen Verschiebung um seine Achse ausgerüstet ist.
